# EUROPEAN PATENT APPLICATION

(11) **EP 3 026 670 A1**
(43) Date of publication of application: **01.06.2016**
(21) Application number: 15186537.5
(22) Date of filing: 23.09.2015
(51) Int. Cl.: G11B 27/034

(54) **METHOD AND ELECTRONIC DEVICE FOR STORING AUDIO DATA**

(30) Priority: 30.10.2014 KR 20140149488
(71) Applicant: Samsung Electronics Co., Ltd., Gyeonggi-do 16677 (KR)
(72) Inventor: KIM, Se Hoon, 59025 Jeollanam-do (KR)
(74) Representative: Land, Addick Adrianus Gosling

(57) **Abstract**

An electronic device is provided. The electronic device includes a memory configured to store audio data, and a processor configured to assign a weight of each of audio data stored at the memory and delete a portion of selected audio data based on the weight of each of the audio data.

## Description

This application claims priority to Korean Patent Application No. 10-2014-0149488, filed October 30, 2014, the content of which is incorporated herein by reference.

The present disclosure relates to a function of storing audio data.

An electronic device such as a conventional smart phone supports a function of storing audio data. For example, a conventional electronic device stores audio data collected from a server that provides a streaming service.

However, the conventional electronic device does not provide a lot of audio data due to a limited size of a storage space at which audio data is stored. For this season, the conventional electronic device deletes audio data in a descending order of storing times to secure a storage space. Furthermore, since the conventional electronic device deletes audio data by the file, it again downloads the deleted audio data from a server to play the deleted audio data. This manner requires an additional buffering time at playing, thereby making it impossible to provide instant playing of contents to a user.

To address the above-discussed deficiencies, it is a primary object to provide at least the advantages described below. Accordingly, an aspect of the present disclosure is to provide an audio data storing method and an electronic device supporting the same, capable of partially deleting stored audio data based on a weight of audio data, thereby making it possible to secure a storage space for audio data to be newly stored.

In accordance with an aspect of the present disclosure, an electronic device includes a memory configured to store audio data, and a processor configured to assign a weight of each of audio data stored at the memory and delete a portion of selected audio data based on the weight of each of the audio data.

Other aspects, advantages, and salient features of the disclosure will become apparent to those skilled in the art from the following detailed description, which, taken in conjunction with the annexed drawings, discloses various embodiments of the present disclosure.

Before undertaking the DETAILED DESCRIPTION below, it may be advantageous to set forth definitions of certain words and phrases used throughout this patent document: the terms "include" and "comprise," as well as derivatives thereof, mean inclusion without limitation; the term "or," is inclusive, meaning and/or; the phrases "associated with" and "associated therewith," as well as derivatives thereof, may mean to include, be included within, interconnect with, contain, be contained within, connect to or with, couple to or with, be communicable with, cooperate with, interleave, juxtapose, be proximate to, be bound to or with, have, have a property of, or the like; and the term "controller" means any device, system or part thereof that controls at least one operation, such a device may be implemented in hardware, firmware or software, or some combination of at least two of the same. It should be noted that the functionality associated with any particular controller may be centralized or distributed, whether locally or remotely. Definitions for certain words and phrases are provided throughout this patent document, those of ordinary skill in the art should understand that in many, if not most instances, such definitions apply to prior, as well as future uses of such defined words and phrases.

### BRIEF DESCRIPTION OF THE DRAWINGS

For a more complete understanding of the present disclosure and its advantages, reference is now made to the following description taken in conjunction with the accompanying drawings, in which like reference numerals represent like parts:
FIG. 1 illustrates an electronic device associated with audio data processing according to various embodiments of the present disclosure;
FIG. 2 illustrates a memory according to various embodiments of the present disclosure;
FIG. 3 illustrates the assigning of a weight to audio data associated with playing of stored audio data according to various embodiments of the present disclosure;
FIG. 4 illustrates assigning of a weight to audio data associated with the storing of newly added audio data according to various embodiments of the present disclosure;
FIG. 5 illustrates determination of a deletion size of audio data checked based on a weight according to various embodiments of the present disclosure;
FIG. 6 illustrates an electronic device operating method associated with playing of audio data according to various embodiments of the present disclosure;
FIG. 7 illustrates an electronic device operating method associated with storage of audio data according to various embodiments of the present disclosure;
FIG. 8 illustrates an execution screen of a streaming radio according to an exemplary embodiment of the inventive concept;
FIG. 9 illustrates assigning of a weight to audio data associated with a streaming audio according to various embodiments of the present disclosure;
FIG. 10 illustrates an electronic device in a network environment according to various embodiments of the present disclosure;
FIG. 11 illustrates an electronic device according to various embodiments of the present disclosure; and
FIG. 12 illustrates a block diagram of a program module according to various embodiments of the present disclosure.

Throughout the drawings, it should be noted that like reference numbers are used to depict the same or similar elements, features, and structures.

### DETAILED DESCRIPTION OF EMBODIMENTS OF THE PRESENT INVENTION

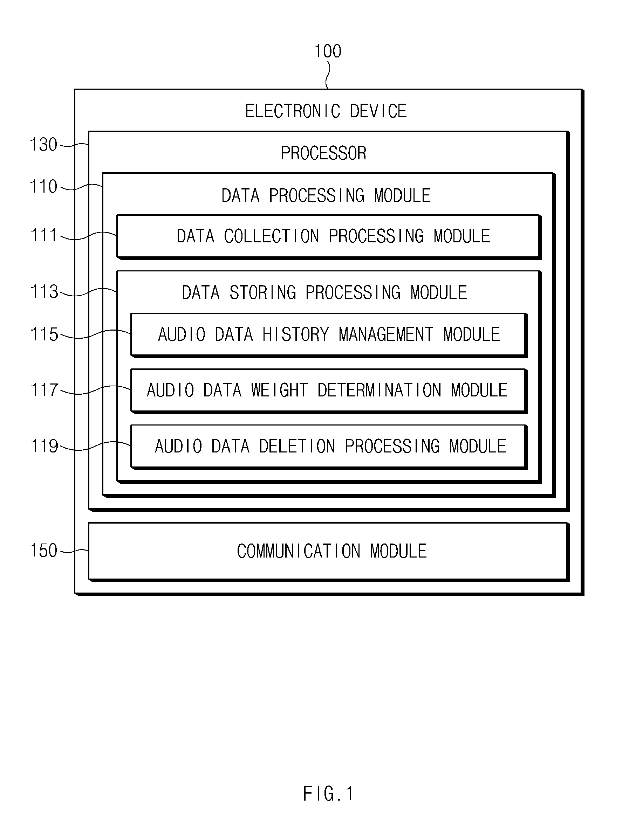

FIGURES 1 through 12, discussed below, and the various embodiments used to describe the principles of the present disclosure in this patent document are by way of illustration only and should not be construed in any way to limit the scope of the disclosure. Those skilled in the art will understand that the principles of the present disclosure may be implemented in any suitably arranged device. Various embodiments of the present disclosure are described with reference to accompanying drawings. Accordingly, those of ordinary skill in the art will recognize that modification, equivalent, and/or alternative on the various embodiments described herein can be variously made without departing from the scope and spirit of the present disclosure. With regard to description of drawings, similar components are marked by similar reference numerals.

In the disclosure disclosed herein, the expressions "have," "may have," "include" and "comprise," or "may include" and "may comprise" used herein indicate existence of corresponding features (e.g., elements such as numeric values, functions, operations, or components) but do not exclude presence of additional features.

In the disclosure disclosed herein, the expressions "A or B," "at least one of A or/and B," or "one or more of A or/and B," and the like used herein includes any and all combinations of one or more of the associated listed items. For example, the term "A or B," "at least one of A and B," or "at least one of A or B" refers to all of the case (1) where at least one A is included, the case (2) where at least one B is included, or the case (3) where both of at least one A and at least one B are included.

The terms, such as "first," "second," and the like used herein refers to various elements of various embodiments of the present disclosure, but do not limit the elements. For example, such terms do not limit the order and/or priority of the elements. Furthermore, such terms is used to distinguish one element from another element. For example, "a first user device" and "a second user device" indicate different user devices. For example, without departing the scope of the present disclosure, a first element is referred to as a second element, and similarly, a second element is referred to as a first element.

It will be understood that when an element (e.g., a first element) is referred to as being "(operatively or communicatively) coupled with/to" or "connected to" another element (e.g., a second element), it can be directly coupled with/to or connected to the other element or an intervening element (e.g., a third element) is present. In contrast, when an element (e.g., a first element) is referred to as being "directly coupled with/to" or "directly connected to" another element (e.g., a second element), it should be understood that there are no intervening element (e.g., a third element).

According to the situation, the expression "configured to" used herein is used as, for example, the expression "suitable for," "having the capacity to," "designed to," "adapted to," "made to," or "capable of." The term "configured to" must not mean only "specifically designed to" in hardware. Instead, the expression "a device configured to" may mean that the device is "capable of" operating together with another device or other components. For example, a "processor configured to perform A, B, and C" may mean a dedicated processor (e.g., an embedded processor) for performing a corresponding operation or a generic-purpose processor (e.g., a central processing unit (CPU) or an application processor) that performs corresponding operations by executing one or more software programs that are stored in a memory device.

Terms used in this specification are used to describe specified embodiments of the present disclosure and are not intended to limit the scope of the present disclosure. The terms of a singular form may include plural forms unless otherwise specified. Unless otherwise defined herein, all the terms used herein, which include technical or scientific terms, may have the same meaning that is generally understood by a person skilled in the art. It will be further understood that terms, which are defined in a dictionary and commonly used, should also be interpreted as is customary in the relevant related art and not in an idealized or overly formal detect unless expressly so defined herein in various embodiments of the present disclosure. In some cases, even if terms are terms that are defined in the specification, they may not be interpreted to exclude embodiments of the present disclosure.

An electronic device according to various embodiments of the present disclosure includes at least one of smartphones, tablet personal computers (PCs), mobile phones, video telephones, electronic book readers, desktop PCs, laptop PCs, netbook computers, workstations, servers, personal digital assistants (PDAs), portable multimedia players (PMPs), Motion Picture Experts Group (MPEG-1 or MPEG-2) Audio Layer 3 (MP3) players, mobile medical devices, cameras, wearable devices (e.g., head-mounted-devices (HMDs), such as electronic glasses), an electronic apparel, electronic bracelets, electronic necklaces, electronic appcessories, electronic tattoos, smart watches, and the like.

According to various embodiments of the present disclosure, the electronic devices are smart home appliances. The smart home appliances includes at least one of, for example, televisions (TVs), digital versatile disc (DVD) players, audios, refrigerators, air conditioners, cleaners, ovens, microwave ovens, washing machines, air cleaners, set-top boxes, TV boxes (e.g., SAMSUNG HOMESYNCTM, APPLE TVTM, or GOOGLE TVTM), game consoles (e.g., XBOXTM and PLAYSTATIONTM), electronic dictionaries, electronic keys, camcorders, electronic picture frames, and the like.

According to various embodiments of the present disclosure, the electronic devices includes at least one of medical devices (e.g., various portable medical measurement devices (e.g., a blood glucose monitoring device, a heartbeat measuring device, a blood pressure measuring device, a body temperature measuring device, and the like)), a magnetic resonance angiography (MRA), a magnetic resonance imaging (MRI), a computed tomography (CT), scanners, and ultrasonic devices) receiving a user input in an idle mode, navigation devices, global positioning system (GPS) receivers, event data recorders (EDRs), flight data recorders (FDRs), vehicle infotainment devices, electronic equipment for vessels (e.g., navigation systems and gyrocompasses), avionics, security devices, head units for vehicles, industrial or home robots, automatic teller's machines (ATMs), points of sales (POSs), or internet of things (e.g., light bulbs, various sensors, electric or gas meters, sprinkler devices, fire alarms, thermostats, street lamps, toasters, exercise equipment, hot water tanks, heaters, boilers, and the like).

According to a certain embodiment of the present disclosure, the electronic devices includes at least one of furniture or buildings/structures, electronic boards, electronic signature receiving devices, projectors, or various measuring instruments (e.g., water meters, electricity meters, gas meters, or wave meters, and the like). The electronic devices, according to various embodiments of the present disclosure, are one or more combinations of the above-mentioned devices. According to various embodiments of the present disclosure, an electronic device is a flexible electronic. Also, electronic devices, according to various embodiments of the present disclosure, are not limited to the above-mentioned devices, and include new electronic devices according to technology development.

Hereinafter, electronic devices, according to various embodiments of the present disclosure, will be described with reference to the accompanying drawings. The term "user" used herein refers to a person who uses an electronic device or refers to a device (e.g., an artificial electronic device) that uses an electronic device.

FIG. 1 is a diagram schematically illustrating an electronic device 100 associated with audio data processing, according to various embodiments of the present disclosure.

Referring to FIG. 1, an electronic device 100 according to various embodiments of the present disclosure includes a processor 130 and a communication module 150. The processor 130 executes operation and data processing associated with the control or communication of components of the electronic device 100. The processor 130 includes a data processing module 110.

The data processing module 110 collects and stores audio data and information (e.g., meta data) associated with the audio data. According to various embodiments of the present disclosure, the data processing module 110 controls a communication module 150 in the electronic device 100 to collect audio data and audio data-related information. Furthermore, the data processing module 110 stores the collected audio data and audio data-related information. The data processing module 110 includes a data collection processing module 111 and a data storing processing module 113.

The data collection processing module 111 collects audio data and audio data-related information. According to various embodiments of the present disclosure, the data collection processing module 111 collects specific audio data and specific audio data-related information from a specific server that provides a streaming service (e.g., streaming radio). In this connection, the streaming radio is a service in which a service provider or contents provider sequentially or continuously provides pieces of audio data included in a station in response to selection of the station classified by the service provider or contents provider, for example, a theme classified for genre, artist, subject, or latest music or the like. Furthermore, the audio data-related information includes genre, track name, artist name, codec type, bit rate, playing time, size of a data area, album artwork, description or the like.

The data storing processing module 113 stores the collected audio data and audio data-related information. The data storing processing module 113 stores the collected audio data and audio data-related information at a memory through the data collection processing module 111. The memory is storage medium (e.g., a memory, a cache memory, a hard disc or the like) (not illustrated) included in the electronic device 100. According to various embodiments of the present disclosure, the data storing processing module 113 performs management of a storage space of the memory, data storing, data deleting or the like. The data storing processing module 113 includes an audio data history management module 115, an audio data weight determination module 117, and an audio data deletion processing module 119.

The audio data history management module 115 manages history information of pieces of audio data stored by the data storing processing module 113. The history information of the pieces of audio data includes information such as a storing time, a last playing time (or a last access time), a playing count, an accumulated playing time or the like of audio data. According to various embodiments of the present disclosure, the audio data history management module 115 stores, changes or deletes history information of specific audio data according to a life cycle (e.g., collection, storing, playing, deletion or the like) of audio data.

The audio data weight determination module 117 determines and assigns (or grants) weights of pieces of audio data stored by the data storing processing module 113. The weights of the pieces of audio data is information that is determined based on preference on the pieces of audio data, probability of playing of the pieces of audio data or the like.

With regard to the preference, for example, the audio data weight determination module 117 determines preference on specific audio data of a user based on information such as a last playing time, a playing count, an accumulated playing time or the like of audio data. According to various embodiments of the present disclosure, in the case where a result of comparing specific audio data and pieces of other audio data indicates that the last playing time is relatively close to a current time, that the playing count is relatively great or that the accumulated playing time is relatively long, the audio data weight determination module 117 determines the preference on the specific audio data as being relatively high.

According to various embodiments of the present disclosure, the audio data weight determination module 117 determines preference on specific audio data based on information such as genre, artist, subject or the like of a music, which a user likes and is collected from the electronic device 100 or an external electronic device connected with the electronic device 100 through the communication module 150. For example, in the case where a user plays specific audio data over a time or a count, the electronic device 100 extracts genre, artist, subject or the like of a music corresponding to the specific audio data from specific audio data-related information and determines them as genre, artist, subject or the like of a music that a user likes. In certain embodiments, the electronic device 100 determines preference of audio data based on information such as genre, artist, subject or the like of a music that a user likes. In this connection, the electronic device 100 performs processing to store information, such as genre, artist, subject or the like of a music that a user likes at a memory included in the electronic device 100 or to store the information at an external electronic device connected with the electronic device 100 through the communication module 150.

According to various embodiments of the present disclosure, the audio data weight determination module 117 assigns a weight that decreases as preference on specific audio data becomes lower than that on pieces of other audio data stored at a memory (e.g., as a last playing time becomes older, as a playing count becomes smaller, or as an accumulated playing time becomes shorter).

With regard to the probability of playing, for example, the audio data weight determination module 117 determines the probability of playing on specific audio data that is being played. For example, the audio data weight determination module 117 determines the probability of playing of audio data, based on whether specific audio data exists at the same state as the audio data being played, a playing order in a specific station or the like. According to various embodiments of the present disclosure, in the case where specific audio data exists at the same state as audio data being played, the audio data weight determination module 117 determines the probability of playing as being relatively high compared to the case the specific audio data exists at another station. Also, as a playing order of specific audio data in a station including the specific audio data becomes faster, the audio data weight determination module 117 determines the probability of playing as being high.

According to various embodiments of the present disclosure, as the probability of playing of specific audio data becomes lower than that that of pieces of other audio data stored at a memory (e.g., as a time or an order from audio data playing increases or as a playing order in a station including specific audio data becomes slower), the audio data weight determination module 117 assigns a small weight thereto.

The audio data deletion processing module 119 deletes (partially or wholly deletes) specific audio data (e.g., a specific sound source file and the like) based on a weight of the specific audio data. According to various embodiments of the present disclosure, the audio data deletion processing module 119 selects audio data to be deleted based on weights of pieces of audio data stored at a memory. For example, the audio data deletion processing module 119 first or all selects audio data, which has a relatively small weight, from among pieces of audio data stored at a memory as a target to be deleted.

According to various embodiments of the present disclosure, the audio data deletion processing module 119 determines a deletion size of the selected audio data. According to various embodiments of the present disclosure, the audio data deletion processing module 119 determines a size, which satisfies a specific size or a specific condition (e.g., the condition that the whole of the selected audio data is not deleted, the condition that a size of the selected audio data is maintained over a specific size or the like). According to various embodiments of the present disclosure, the audio data deletion processing module 119 determines a deletion size based on a weight of the selected audio data. For example, the audio data deletion processing module 119 assigns a relatively great deletion size to audio data having a small weight and a relatively small deletion size to audio data having a great weight.

According to various embodiments of the present disclosure, the audio data deletion processing module 119 deletes the selected audio data by the determined deletion size, based on a weight. According to various embodiments of the present disclosure, the audio data deletion processing module 119 deletes the selected audio data from an end point of a data area of the selected audio data (sound source file) by the determined deletion size.

According to various embodiments of the present disclosure, the audio data deletion processing module 119 stores a data area size of audio data at header information of the audio data to collect deleted portions of pieces of audio data. Also, the audio data deletion processing module 119 performs processing to additionally store a data area size of audio data or information, which corresponds to a start point of a deleted portion of the audio data at a specific file (e.g., a file of a html (hypertext markup language) form including information associated with collection of the audio data).

According to various embodiments of the present disclosure, the processor 130 processes an input event associated with audio data. For example, the processor 130 processes an audio data play start event, an audio data store event or the like. According to various embodiments of the present disclosure, the processor 130 determines whether specific audio data is stored at the electronic device 100, in response to the audio data play start event. If specific audio data is not stored at the electronic device 100, the processor 130 collects the specific audio data based on the data collection processing module 111. According to various embodiments of the present disclosure, the processor 130 stores the collected audio data based on the data storing collecting module 113.

According to various embodiments of the present disclosure, the audio data history management module 115, the audio data weight determination module 117 or the audio data deletion processing module 119 is implemented independently of each other or is implemented such that at least one component thereof is included in another component. Also, various embodiments of the present disclosure are exemplified as the data processing module 110 is included in the processor 130. However, the scope and spirit of the present disclosure not be limited thereto. For example, the data processing module 110 is implemented to be independent of the processor 130.

The communication module 150 is configured to establish the communication between the electronic device 100 and an external electronic device (e.g., a server supporting a streaming radio). The communication module 150 is connected to a network through wired communication or wireless communication. For example, the electronic device 100 is connected to the wired/wireless communication of the communication module 150 and communicates with a server supporting the streaming radio.

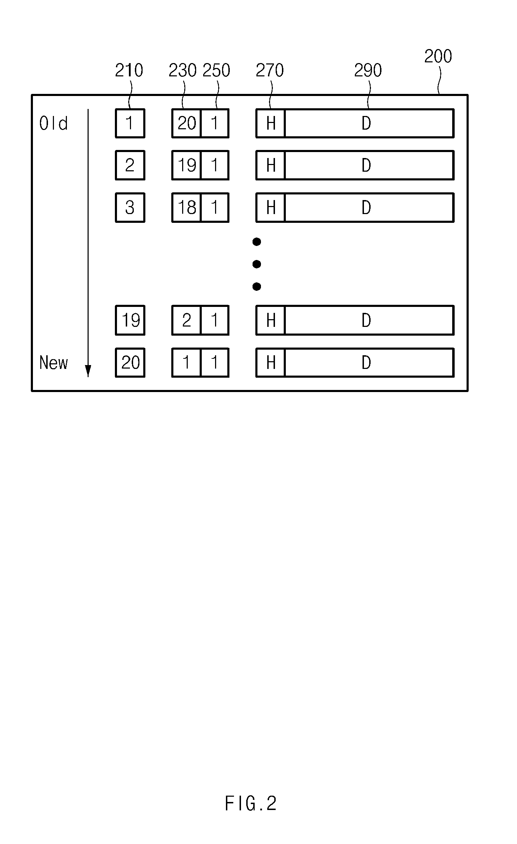

FIG. 2 is a diagram schematically illustrating a memory 200 according to various embodiments of the present disclosure.

Referring to FIG. 2, a memory 200 according to various embodiments of the present disclosure is a space where audio data and audio data-related information are stored and is a storage medium (e.g., a memory, a cache memory and the like) included in an electronic device (e.g., an electronic device 100 illustrated in FIG. 1). The memory 200 includes an order number 210, weight information 230, history information 250, header information 270, body information 290 and the like.

The order number 210 is a number that is assigned in order according to a storing time of audio data stored at the memory 200. According to various embodiments of the present disclosure, the order number 210 is a station, which is designated by a specific server providing a streaming radio and a playing order of audio data included in the station. For example, for third audio data of a first station designated by the specific server, the order number 210 includes information of "1-3". According to various embodiments of the present disclosure, the order number 210 is used as an identifier of associated audio data.

The history information 250 is information corresponding to a history of audio data stored at the memory 200. According to various embodiments of the present disclosure, the history information 250 includes at least one of pieces of information such as a storing time, a last playing time, a playing count, an accumulated playing time or the like of audio data. According to various embodiments of the present disclosure, the history information 250 is information including times or numbers corresponding to a storing time, a last playing time, a playing count, and an accumulated playing time of audio data. For example, in the case where specific audio data is first collected in October 27, 2014, at 9:15:10.00, from a specific server, is played during 40 seconds and is played during 40 seconds at 9:31:21.00 on the same day and during 10 seconds at 10:11:33.00 on the same day, the history information 250 corresponding to the specific audio data includes information such as a storing time of 2014-10-27, 09:15:50.00, a last playing time of 2014-10-27, 10:11:43.00, and an accumulated playing time of 00:01:30.00.

The weight information 230 is information corresponding to a weight of audio data stored at the memory 200. According to various embodiments of the present disclosure, the weight information 230 is a number or a percentage (%) that is assigned according to preference checked based on the history information 250, the probability of playing checked based on the order number 210 or the like. According to various embodiments of the present disclosure, the weight information 230 is assigned according to a last execution time, a playing count, an accumulated playing time or the like included in the history information 250. For example, the weight information 230 includes a lower weight as the last execution time of audio data becomes longer, the playing count becomes smaller, or the accumulated playing time become shorter. Furthermore, the weight information 230 is assigned according to a playing order of audio data that the order number 210 indicates. For example, the weight information 230 includes a lower weight as a time or an order from audio data playing increases or as a playing order (e.g., a playing order in a station designated by a service/contents provider supporting a streaming radio) in a station including corresponding audio data becomes slower. For example, in the case where a weight corresponding to audio data being played corresponds to 1 or 100%, a weight corresponding to audio data previously played is a number (e.g., 2) greater than 1 or a percentage (e.g., 95%) lower than or equal to 100%.

The header information 270 is information for describing or identifying information corresponding to a data area of audio data. According to various embodiments of the present disclosure, the header information 270 includes audio data-related information. For example, the header information 270 includes genre, track name, artist name, codec type, bit rate, playing time, size of a data area, album art, description or the like of audio data. According to various embodiments of the present disclosure, genre, artist name or the like of audio data included in the header information 270 is used as a reference for determining preference of a user with regard to a function of assigning a weight of audio data.

The body information 290 is information corresponding to a data area of audio data. For example, the body information 290 is a real sound source. According to various embodiments of the present disclosure, information corresponding to the body information 290, for example, the real sound source of audio data is stored through encryption. For example, if being greater than or equal to a size, information corresponding to the body information 290 is encrypted and stored according to a request of a service/contents provider providing a streaming radio.

With the above description, various embodiments of the present disclosure is exemplified as the order number 210, the weight information 230, or the history information 250 is stored at the memory 200 independently of specific audio data (header information 280 and body information 290). However, the scope and spirit of the inventive concept may not be limited thereto. For example, according to various embodiments of the present disclosure, at least one of the order number 210, the weight information 230, or the history information 250 is stored to be included in specific audio data.

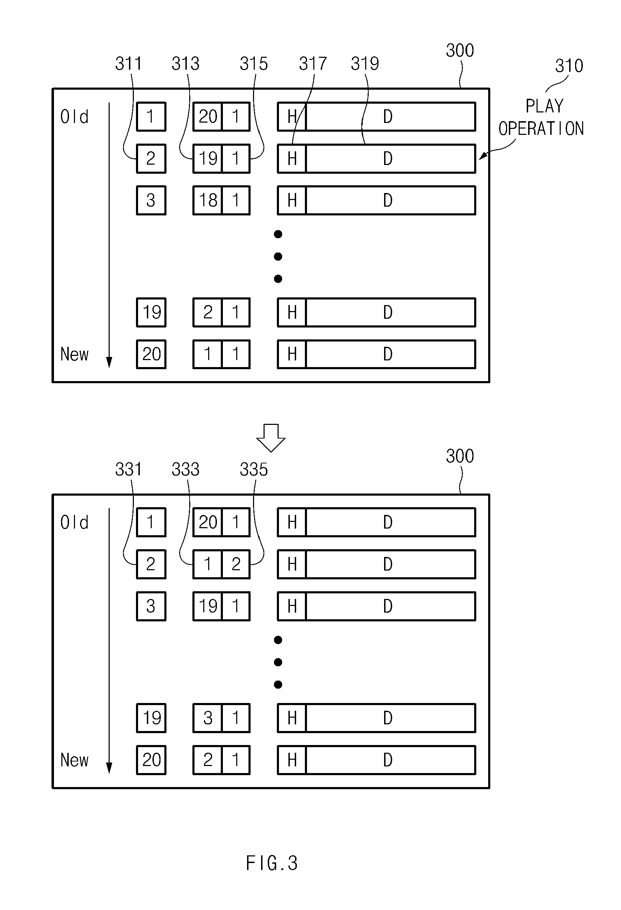

FIG. 3 is a diagram schematically illustrating the assigning of a weight to audio data associated with playing of stored audio data according to various embodiments of the present disclosure.

Referring to FIG. 3, according to various embodiments of the present disclosure, an electronic device (e.g., an electronic device 10 of FIG. 1) includes a memory 300. According to various embodiments of the present disclosure, the memory 300 is a space where there are stored audio data and audio data-related information that an electronic device collects with regard to a streaming radio. The memory 300 is configured to be identical or similar to a memory 200 of FIG. 2. The memory 300 includes an order number 311, weight information 313, history information 315, header information 317, or body information 319 associated with each of audio data.

According to various embodiments of the present disclosure, an electronic device plays specific audio data stored at the memory 300 in response to a specific event (e.g., a previous track playing event and the like). For example, in the case where specific audio data corresponding to the prevent track playing event is stored at the memory 300, the electronic device collects the specific audio data from the memory 300 and plays the collected audio data.

According to various embodiments of the present disclosure, an order number 311, weight information 313, and history information 315 are provided with regard to specific audio data. For example, the order number indicating a storing order according to a storing time of specific audio data is 2, the weight information 313 assigned based on the order number 311 or the history information 315 is 19, and the history information 315 indicating a playing count is 1. Also, the specific audio data includes an order number 331, weight information 333, and history information 335 that are newly assigned according to play operation 310. In certain embodiments, the order number 331 newly assigned is set to 2, the weight information 333 newly assigned is set to 1, and the history information 335 newly assigned is set to 2.

According to various embodiments of the present disclosure, an electronic device again assigns a weight in response to the play operation 310 of specific audio data. According to various embodiments of the present disclosure, there is changed weight information of pieces of audio data, which has a weight greater than the weight information 313, from among pieces of audio data stored at the memory 300. For example, in the case where the weight information 313 of specific audio data is 19, weight information of pieces of audio data having weights of 1 to 18 greater than the weight of 19 is changed to have weights of 2 to 19, respectively.

Various embodiments of the present disclosure are exemplified as the weight information 313 and 333 of specific audio data is expressed in the form of a number indicating a priority. However, the scope and spirit of the present disclosure may not be limited thereto. For example, according to various embodiments of the present disclosure, the weight information 313 and 333 is expressed in the form of a ratio indicating the degree of weight. Also, various embodiments of the present disclosure are exemplified as the history information 315 and 335 of specific audio data is expressed in the form of a number indicating a playing count. However, the scope and spirit of the present disclosure may not be limited thereto. For example, according to various embodiments of the present disclosure, the history information 315 and 335 is expressed in the form of a time indicating a last playing time.

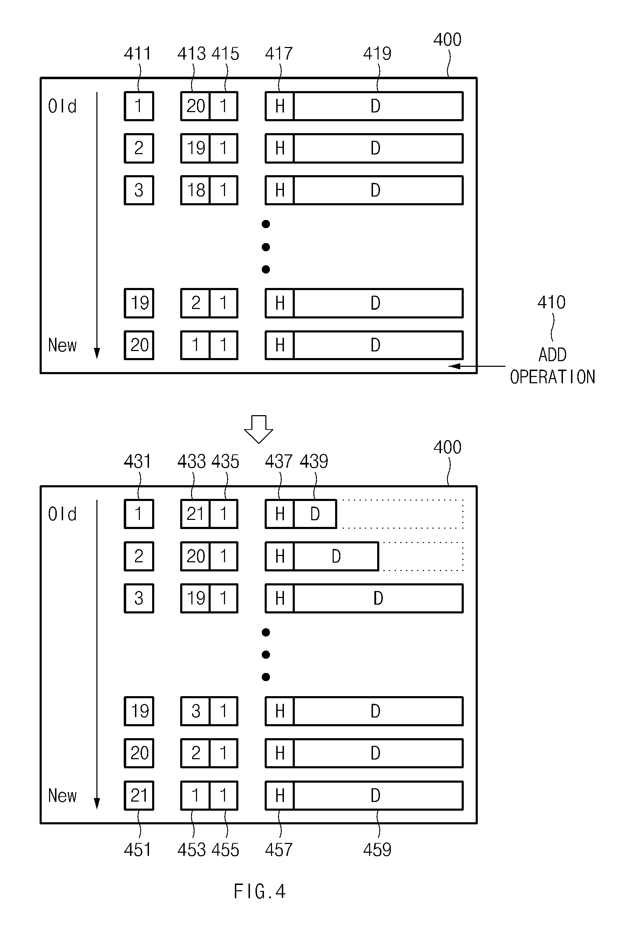

FIG. 4 is a diagram schematically illustrating assigning of a weight to audio data associated with the storing of newly added audio data, according to various embodiments of the present disclosure.

Referring to FIG. 4, according to various embodiments of the present disclosure, an electronic device (e.g., an electronic device 10 of FIG. 1) includes a memory 400. According to various embodiments of the present disclosure, the memory 400 is configured to be identical or similar to a memory 200 of FIG. 2. The memory 400 includes an order number 411, weight information 413, history information 415, header information 417, or body information 419 associated with each of pieces of audio data.

According to various embodiments of the present disclosure, an electronic device collects audio data from a specific server (e.g., a server supporting a streaming radio) in response to a specific event (e.g., a previous track playing event and the like). For example, in the case where specific audio data corresponding to the prevent track playing event is not stored at the memory 400, the electronic device collects the specific audio data from the specific sever and plays the collected audio data. According to various embodiments of the present disclosure, with regard to collecting the specific audio data, the collected audio data is newly added at the memory 400 through add operation 410.

According to various embodiments of the present disclosure, add operation 410 further includes securing a storage space for audio data newly added due to a limited size of the memory 400. According to various embodiments of the present disclosure, the electronic device performs a function of securing a storage space based on weight information 413 of audio data previously stored at the memory 400. For example, the electronic device selects audio data having a relatively small weight as a deletion target, based on a priority corresponding to the weight information 413 or a ratio indicating the degree of weight. In the case where audio data to be deleted is selected, the electronic device secures a storage space by deleting a portion of the selected audio data as much as a specific size or a size satisfying a specific condition. In this connection, the audio data that is partially deleted includes an order number 431, weight information 433, history information 435, header information 437, and body information 439.

According to various embodiments of the present disclosure, the audio data additionally stored at the memory 400 through add operation 410 includes an order number 451, weight information 453, history information 455, header information 457, and body information 459. According to various embodiments of the present disclosure, the order number 451 of the additionally stored audio data is assigned based on an order number of lastly stored audio data. For example, in the case where an order number of audio data lastly stored at the memory 400 is 20, the order number 451 of the additionally stored audio data becomes 21. Alternatively, the order number 451 is a station designated by a specific server providing a streaming radio and a playing order of audio data included in the station. According to various embodiments of the present disclosure, since the additionally added audio data is audio data being currently played, the probability that the additionally added audio data is selected as a target to be deleted is low; hence, weight information 453 includes a weight of 1 greater than other audio data stored at the memory 400.

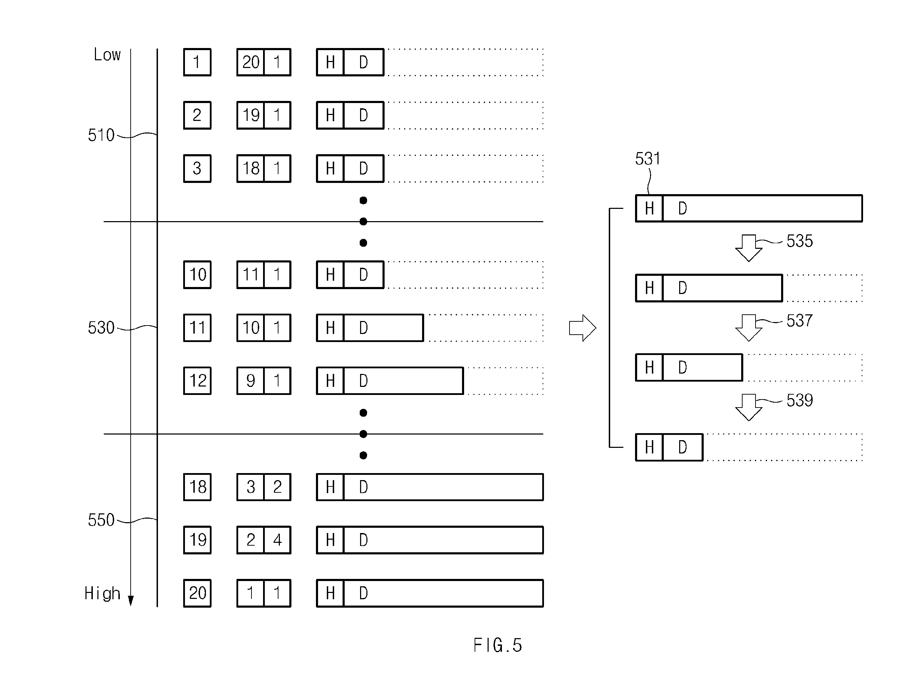

FIG. 5 is a diagram schematically illustrating determination of a deletion size of audio data checked based on a weight according to various embodiments of the present disclosure.

Referring to FIG. 5, an electronic device (e.g., an electronic device 101 of FIG. 1) according to various embodiments of the present disclosure stores a file or information (hereinafter referred to as "management list") such as a list and the like for managing pieces of audio data stored at a memory (e.g., a memory 200 of FIG. 2) included in the electronic device. The management list is information in which identifiers (e.g., an order number and the like) for recognizing audio data are arranged according to weights of pieces of audio data stored at the memory. The management list is divided into a plurality of areas based on weights of pieces of audio data. For example, the management list is divided into a first weight area 510, a second weight area 530, or a third weight area 550.

The first weight area 510 is an area where an identifier of audio data to be deleted first with regard to securing a storage space for audio data is stored. For example, as compared to pieces of audio data classified as another area (e.g., a second weight area 530 or a third weight area 550), pieces of audio data classified as the first weight area 510 becomes old in a last execution time, small in a playing count, increased in a time or an order from audio data being played, or slow in a playing order in a station including associated audio data. For this reason, pieces of audio data classified as the first weight area 510 are pieces of audio data with a small weight.

According to various embodiments of the present disclosure, pieces of audio data classified as the first weight area 510 are set such that a deletion size has the lowest level (or is set to the smallest size). In this connection, the deletion size is determined according to a weight of audio data for a level. For example, the deletion size is determined to correspond to a playing time of 5 seconds for the lowest level, to correspond to a playing time of 10 seconds (longer than for the lowest level) for a middle level, and to correspond to a playing time of 30 seconds (longer than for the middle) for the highest level. According to various embodiments of the present disclosure, the deletion size corresponding to the level is determined in connection with a point in time of a data request occurring at communication with a server, which supports a streaming radio, with regard to collection of audio data. Also, the deletion size corresponding to the level is differently determined according to a manner in communication with a server supporting a streaming radio, sensitivity in communication of an electronic device (e.g., an electronic device 100), a weight of audio data or the like.

The second weight area 530 is an area where there is stored an identifier of audio data to be deleted following the first weight area 510 with regard to securing a storage space for audio data. According to various embodiments of the present disclosure, an order in which stations designated for a theme with regard to a streaming radio are provided to a user is determined by designation of a service provider or contents provider. Furthermore, since a station and audio data are selected and changed sequentially or automatically according to the determined order, the probability that a station and audio data, of which the orders pass, are played is low unless orders thereof are arbitrarily changed by a user. In this connection, the second weight area 530 is an area that an identifier of audio data except for audio data being played and audio data with high probability of playing is stored.

According to various embodiments of the present disclosure, levels, each corresponding to a deletion size, of pieces of audio data classified as the second weight area 530 may be gradually lowered. For example, pieces of audio data classified as the second weight area 530 may be deleted as much as a size corresponding to the highest level when being deleted first (operation 535), may be deleted as much as a size corresponding to a middle level when being deleted second (operation 537), and may be deleted as much as a size corresponding to the lowest level when being deleted third (operation 539). According to various embodiments of the present disclosure, a deletion size on pieces of audio data classified as the second weight area 530 are determined according to a data area size included in header information 531. For example, audio data may be deleted as much as a size corresponding to the highest level if the audio data has a data area size greater than a size corresponding to the highest level, may be deleted as much as a size corresponding to a middle level if the audio data has a data area size smaller than a size corresponding to the highest level and greater than a size corresponding to the middle level, or may be deleted as much as a size corresponding to the lowest level if the audio data has a data area size smaller than a size corresponding to the middle level.

The third weight area 550 is an area where an identifier of audio data with relatively low probability of deletion with regard to securing a storage space for audio data is stored. According to various embodiments of the present disclosure, pieces of audio data classified as the third weight area 550 is audio data being played with regard to a streaming radio or audio data with high probability of playing (e.g., a previous track, a next track, a track in the same station, or audio data to be played for each station (e.g., a first track of a station or a last track of a station)). According to various embodiments of the present disclosure, pieces of audio data classified as the third weight area 550 may be deleted if a storage space is insufficient even after pieces of audio data classified as the first weight area 510 and the second weight area 530 are deleted first. In certain embodiments, pieces of audio data classified as the third weight area 550 may be deleted according to a manner similar to or the same as a manner where pieces of audio data classified as the second weight area 530 are deleted.

According to various embodiments of the present disclosure, as described above, an electronic device includes a memory in which audio data is stored, and a processor configured to assign a weight of each of audio data stored at the memory and to delete a portion of selected audio data based on the weight of each of the audio data.

According to various embodiments of the present disclosure, the processor assigns a weight of each of the audio data based on at least one of a preference on the audio data, which is checked according to history information of the audio data or probability of playing on the audio data.

According to various embodiments of the present disclosure, the history information of the audio data includes at least one of a storing time, a last playing time, a playing count, or an accumulated playing time of the audio data.

According to various embodiments of the present disclosure, the probability of playing on the audio data is checked based on at least one of how the audio data is adjacent to audio data being played in time or order, whether the audio data exists in the same play list as the audio data being played, or a playing order in a specific play list.

According to various embodiments of the present disclosure, the processor deletes a portion of the selected audio data as much as a constant size or as much as a size determined according to the weight of each of the audio data.

According to various embodiments of the present disclosure, the processor checks whether the specific audio data is stored at the memory, in response to a playing request on the specific audio data.

According to various embodiments of the present disclosure, the processor collects the specific audio data from a specific server, which is connected based on a communication module included in the electronic device, if the specific audio data is not stored at the memory, and the processor stores the collected audio data at the memory if a size of the collected audio data is greater than or equal to a specific size.

According to various embodiments of the present disclosure, if the specific audio data is deleted by a constant size or more and the specific audio data thus deleted is stored at the memory, the processor collects the deleted data of the specific audio data from a specific server, which is connected based on a communication module included in the electronic device at a point in time when the specific audio data is played during a constant time or by a constant size, and the processor stores the deleted data thus collected at the memory to be continuous with a deleted portion of the specific audio data or to be associated therewith.

According to various embodiments of the present disclosure, the processor is configured to again assign a weight of the specific audio data to have a weight greater than other audio data stored at the memory.

According to various embodiments of the present disclosure, the processor compares a size of collected audio data and a size of a free space of the memory in response to a playing request on specific audio data, and if the size of the collected audio data is greater than that of the free space of the memory, the processor deletes a portion of specific audio data stored at the memory.

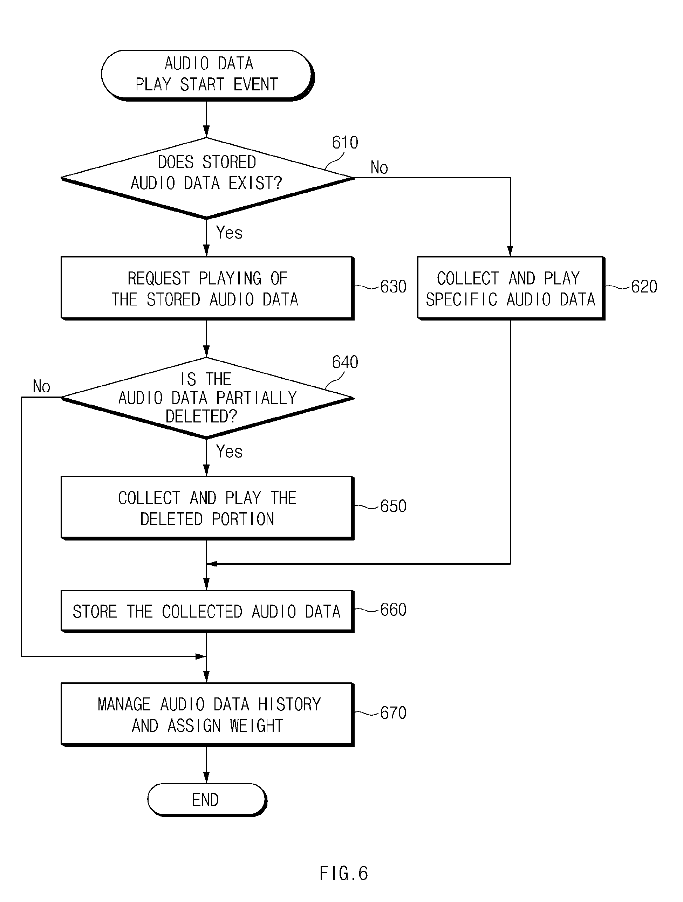

FIG. 6 is a flow chart schematically illustrating an electronic device operating method associated with playing of audio data, according to various embodiments of the present disclosure.

Referring to FIG. 6, in an electronic device operating method, in operation 610, an electronic device (e.g., an electronic device 100) checks whether specific audio data is stored at a memory, in response to an audio data play start request.

If the specific audio data is not stored at the memory, in operation 620, the electronic device collects the specific audio data from a server device (e.g., a server supporting a streaming audio) that is connected through a communication module (e.g., a communication module 150) included in the electronic device and plays the collected audio data.

If the specific audio data exists at the memory, in operation 630, the electronic device requests playing of the audio data stored at the memory. In operation 640, the electronic device checks whether the stored audio data is audio data that is partially deleted. In the case where the stored audio data is not audio data that is partially deleted, the electronic device performs operation 670.

In the case where the stored audio data is audio data that is partially deleted, in operation 650, the electronic device collects audio data, which corresponds to the deleted portion of the audio data, from the server device connected through the communication module included in the electronic device and plays the collected audio data. According to various embodiments of the present disclosure, the electronic device performs processing to collect audio data corresponding to the deleted portion based on a data area size included in header information of the audio data, a data area size of audio data included in a specific file (e.g., a file of a html form including information associated with collection of audio data), information corresponding to a start point of the deleted portion, or the like.

In the case of collecting the specific audio data as described in operation 620 or collecting audio data corresponding to a deleted portion as described in operation 650, the electronic device checks whether the memory has a free (or empty) space and stores the collected audio data. If the free (or empty) space does not exist, the electronic device performs securing of a free space. For example, the electronic device partially deletes pieces of audio data, of which the weights are low, based on weights of pieces of audio data stored at the memory, thereby making it possible to secure a free space.

If a free space exists or if a free space is secured through the above-described operation (i.e., securing of the free space), in operation 660, the electronic device performs processing to store the collected audio data. According to various embodiments of the present disclosure, in the case of storing audio data that is not stored at the memory, the electronic device stores the audio data and stores an identifier (e.g., an order number and the like) of the audio data at a corresponding weight area of the management list. Furthermore, in the case of collecting audio data corresponding to the deleted portion, the electronic device stores the collected audio data to be continuous or associated with the deleted portion of audio data associated with the collected audio data.

In operation 670, the electronic device performs a function of managing history information of audio data and assigning a weight. According to various embodiments of the present disclosure, the electronic device changes a playing count and a last playing time of audio data corresponding to a play start request. For example, the electronic device assigns a time when the play start request is received, to the last playing time of corresponding audio data and increases the playing count of the corresponding audio data. Furthermore, the electronic device sets weight information of corresponding audio data to a great weight.

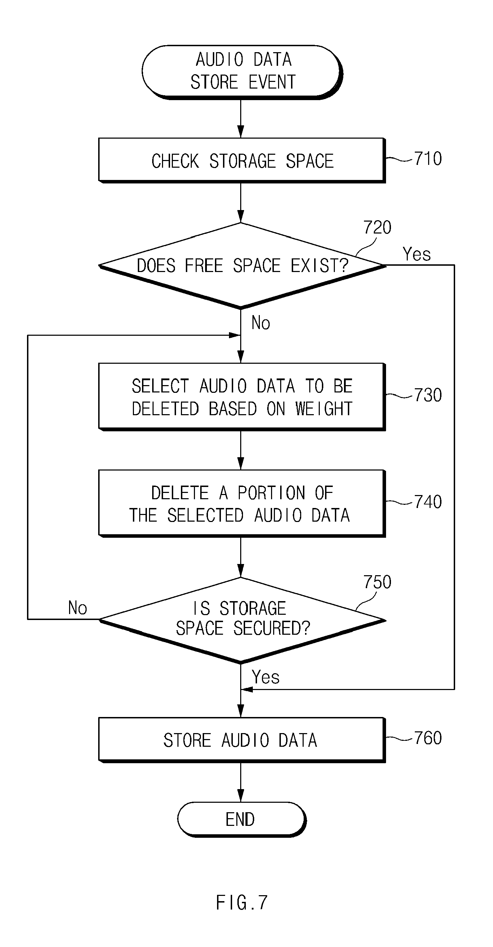

FIG. 7 is a flow chart schematically illustrating an electronic device operating method associated with storage of audio data, according to various embodiments of the present disclosure.

Referring to FIG. 7, in an electronic device operating method, in operation 710, an electronic device (e.g., an electronic device 100 of FIG. 1) checks a memory in response to an audio data store request. For example, the electronic device checks a size of a free space of the memory.

In operation 720, the electronic device compares a size of the checked free space in the memory and a size of write-requested audio data and determines whether a free space at which the write-requested audio data is to be stored exists. In the case where a free space exists, in operation 760, the electronic device performs processing to store the write-requested audio data at the memory.

In the case where the free space does not exist, in operation 730, the electronic device selects audio data to be deleted, based on weight information of audio data. According to various embodiments of the present disclosure, the electronic device sequentially selects audio data to be deleted for a weight area classified in the management list. For example, the electronic device selects audio data, which is classified as a first weight area (e.g., a first weight area 510) of the management list, as a target to be deleted first. Furthermore, the electronic device selects audio data, which is classified as a second weight area (e.g., a second weight area 530 of FIG. 5) of the management list, as a target to be deleted second, and audio data that is classified as a third weight area (e.g., a third weight area 550 of FIG. 5) is selected as a target to be deleted last.

If audio data to be deleted is selected, in operation 740, the electronic device deletes a portion of the selected audio data as much as a specific size or condition. The specific condition includes the condition that the whole of the selected audio data is not deleted or the condition that the selected audio data is maintained as much as the specific size or more. According to various embodiments of the present disclosure, the electronic device determines a deletion size based on weight information of audio data or a data area size of audio data.

If a portion of the selected audio data is deleted, in operation 750, the electronic device determines whether a free space of a memory where write-requested audio data is to be stored is secured. In the case where a free space is not secured, the electronic device returns to operation 730, may repeat operations 730 and 740, and performs processing to secure a free space. In the case where the free space is secured, in operation 760, the electronic device performs processing to store the write-requested audio data at the memory.

According to various embodiments of the present disclosure, as described above, an audio data storing method of an electronic device includes assigning a weight of each of audio data stored at a memory and deleting a portion of selected audio data based on the weight of each of the audio data.

According to various embodiments of the present disclosure, the assigning of the weight includes assigning a weight of each of the audio data based on at least one of a preference on the audio data, which is checked according to history information of the audio data or probability of playing on the audio data.

According to various embodiments of the present disclosure, the assigning of the weight further includes including at least one of a storing time, a last playing time, a playing count, or an accumulated playing time of the audio data in the history information of the audio data.

According to various embodiments of the present disclosure, the assigning of the weight further includes checking probability of playing on the audio data based on at least one of how the audio data is adjacent to audio data being played in time or order, whether the audio data exists in the same play list as the audio data being played, or a playing order in a specific play list.

According to various embodiments of the present disclosure, the deleting of the part further includes deleting a portion of the selected audio data as much as a constant size or as much as a size determined according to the weight of each of the audio data.

According to various embodiments of the present disclosure, the audio data storing method further includes checking whether the specific audio data is stored at the memory, in response to a play request on the specific audio data.

According to various embodiments of the present disclosure, the audio data storing method further includes collecting the specific audio data from a specific server, which is connected based on a communication module included in the electronic device, if the specific audio data is not stored at the memory, and storing the collected audio data at the memory if a size of the collected audio data is greater than or equal to a specific size.

According to various embodiments of the present disclosure, the audio data storing method further includes if the specific audio data is deleted by a size or more and the specific audio data thus deleted is stored at the memory, collecting the deleted data of the specific audio data from a specific server, which is connected based on a communication module included in the electronic device at a point in time when the specific audio data is played during a constant time or by a constant size, and storing the deleted data thus collected at the memory to be continuous with a deleted portion of the specific audio data or to be associated therewith.

According to various embodiments of the present disclosure, the audio data storing method further includes again assigning a weight of the specific audio data to have a weight greater than other audio data stored at the memory.

According to various embodiments of the present disclosure, the audio data storing method further includes comparing a size of collected audio data and a size of a free space of the memory in response to a play request on specific audio data, and if the size of the collected audio data is greater than that of the free space of the memory, deleting a portion of specific audio data stored at the memory.

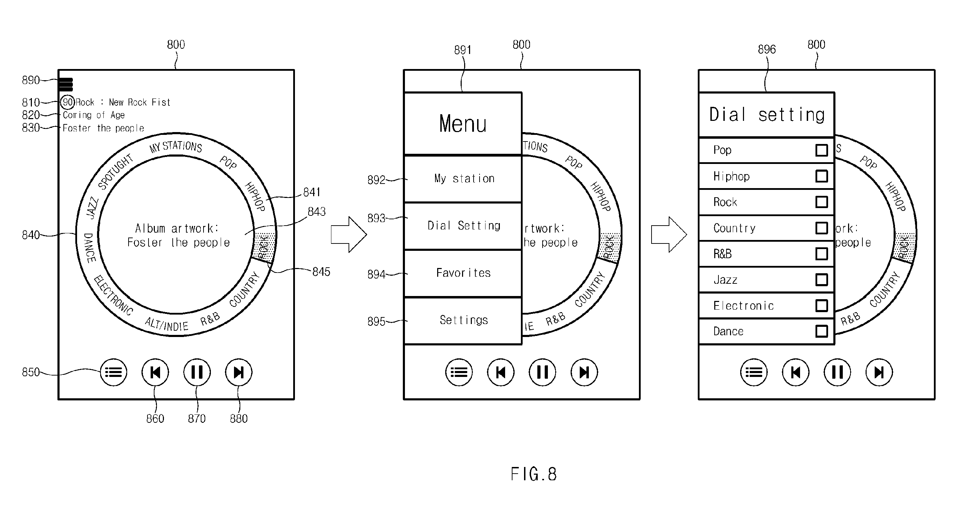

FIG. 8 is a diagram schematically illustrating an execution screen 800 of a streaming radio according to an exemplary embodiment of the inventive concept. According to various embodiments of the present disclosure, an application associated with the streaming radio is installed on an electronic device (e.g., an electronic device 100 of FIG. 1). In the case where the application associated with the streaming radio is executed or used by a user, the electronic device displays a screen such as an execution screen 800 of the streaming radio.

Referring to FIG. 8, the execution screen 800 of the streaming radio according to various embodiments of the present disclosure includes station information 810, a track name 820, an artist name 830, a station select dial 840, a play list button 850, a previous item play button 860, a play/pause button 870, a next item play button 880, and a player control menu 890.

The station information 810 includes texts such as a number of a station in which specific audio data is included, a name of the station, genre or the like. The station is a group of audio data that a service provider or contents provider for providing the streaming radio designates a theme grouped for a genre, an artist, the newest music, or a subject. The track name 820 includes texts such as a track name and the like of the designated audio data. The artist name 830 includes texts such as an artist name and the like of the designated audio data.

The station select dial 840 is an interface that allows a to-be-played station to be changed in response to the selection of a user and includes a station area 841, an album art area 843, and a station indicator 845. For example, for dialing where a user pushes and rotates an area of the station select dial 840, the electronic device changes a station to be played into a corresponding station included in the station area 841 that the station indicator 845 points out. In this connection, the station area 841 is an area where stations, designated by the service provider or contents provider, and a user-selected station are arranged. The album art area 843 is an area where an album art of specific audio data is displayed. The station indicator 845 is a line or image that indicates a location of the specific audio data, from among items included in a station.

According to various embodiments of the present disclosure, if a station is changed according to dialing, the electronic device collects audio data that corresponds to a first track of the selected station or to a track lastly played. Furthermore, the electronic device perform operations, such as checking of a free space of a memory and securing of the free space, to store the collected audio data at a memory. The electronic device stores the collected audio data at the memory if a free space of the memory is secured. In certain embodiments, since audio data that is collected in response to dialing has high probability of playing, a great weight is assigned to the audio data compared to pieces of other audio data stored at the memory.

The play list button 850 is a button for a function of displaying a list of pieces of audio data included in a specific station. For example, the play list button 850 includes a function of displaying a list of pieces of audio data included in a station, to which audio data being played belongs, in response to selection of a user. In certain embodiments, this list is displayed using a method such as pup-up, screen change or the like.

The previous item play button 860 is a button for a function of playing specific audio data from the beginning or playing audio data just before the specific audio data in time or order. According to various embodiments of the present disclosure, in the case of playing the audio data just before the specific audio data in time or order according to selection of the previous item play button 860, the electronic device plays corresponding audio data stored at the memory. In certain embodiments, weight information of the corresponding audio data is varied to have a great weight. Furthermore, a great weight is assigned to weight information of audio data having high probability to be played following the corresponding audio data.

The play/pause button 870 is a button for a function of playing or temporarily stopping the specific audio data just following the specific audio data in time or order. According to various embodiments of the present disclosure, the electronic device collects corresponding audio data just following the specific audio data in time or order in response to selection of the next item play button 880. In certain embodiments, since the collected audio data has high probability of playing, a great weight is assigned to the collected audio data compared to pieces of other audio data stored at the memory.

According to various embodiments of the present disclosure, since audio data being played must not be deleted, a weight of the audio data being played is greater than those of pieces of other audio data stored at the memory. Furthermore, audio data corresponding to a previous track of the audio data being played includes a weight smaller than audio data corresponding to a next track of the audio data being played, because having low probability of playing.

The player control menu 890 is an interface for a function setting of an application associated with a streaming radio. According to various embodiments of the present disclosure, the electronic device displays a pop-up 891, which includes a detailed item at an execution screen 800 in response to selection of the player control menu 890. According to various embodiments of the present disclosure, the electronic device separately constructs a screen corresponding to the pop-up 891 and displays the screen at the execution screen 800 using a screen change manner.

According to various embodiments of the present disclosure, the pop-up 891 includes a user-selected station management item 892, a dial setting item 893, a favorite track item 894, other setting item 895 or the like. The other setting item 895 is an item providing a function such as setting of a volume level, setting of a display function or the like.

The user-selected station management item 892 is an item for setting a user-selected station to allow a user to play a desired track in a desired order. Since preference of a user on pieces of audio data included in a user-selected station is relatively high, a great weight is assigned to the audio data in the user-selected station compared to pieces of audio data included in another station.

The favorite track item 894 is an item for managing tracks that a user likes. For example, if audio data is changed into a favorite track by selection of a user while playing pieces of audio data in the order in which a streaming radio provides the pieces of audio data, the electronic device designates and manages associated audio data as a favorite track. In certain embodiments, since preference of a user on the audio data designated as a favorite track is relatively high, a great weight is assigned to the audio data thus designated compared to pieces of other audio data stored at the memory.

The dial setting item 893 is an item used to set stations arranged in the station area 841. According to various embodiments of the present disclosure, based on selection of the dial setting item 893, the electronic device displays a setting object 896, which includes a check box capable of selecting a type of a station provided from the streaming radio and the station, as the execution screen 800 in a manner such as pop-up, screen change or the like.

According to various embodiments of the present disclosure, the electronic device 896 arranges stations, which are selected through the setting object 896 (through a dial setting operation) at a station area 841. In certain embodiments, since pieces of audio data included in the selected stations have high probability of playing, a relatively great weight is assigned to the audio data included in the selected stations. Furthermore, since pieces of audio data included in a station, which are excluded through the dial setting operation after being previously arranged in the station area 841, have relatively high probability of playing, a small weight is assigned thereto, thereby making probability of deletion high.

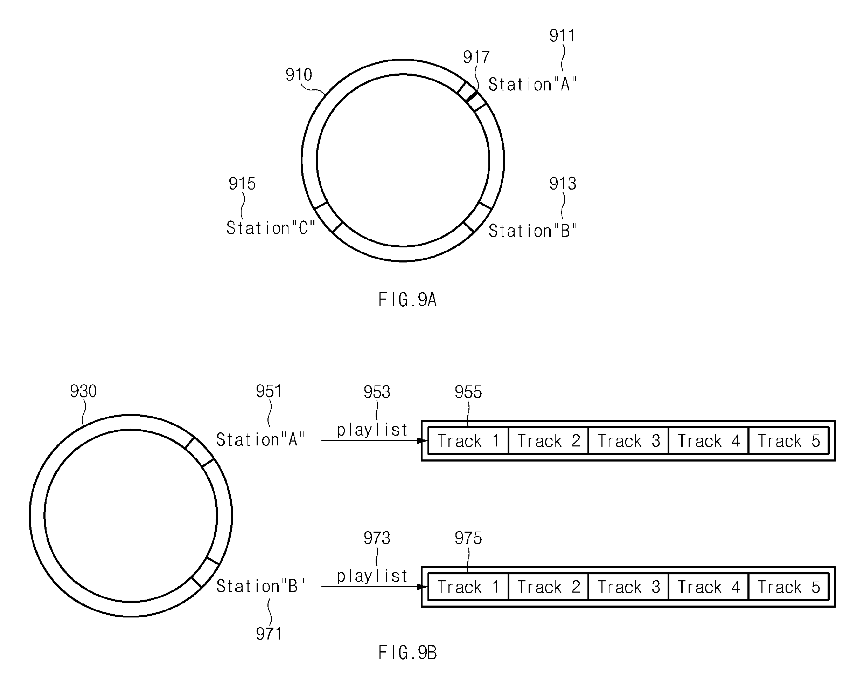

FIG. 9 is a diagram schematically illustrating assigning of a weight to audio data associated with a streaming audio, according to various embodiments of the present disclosure.

Referring to FIG. 9A, with regard to a streaming radio, an electronic device (e.g., an electronic device 100 of FIG. 1) displays a station select dial 910 at a screen. The station select dial 910 includes a first station 911 (e.g., station "A"), a second station 913 (e.g., station "B"), a third station 915 (e.g., station "C"), and a station indicator 917 that are properly arranged at a station area.

According to various embodiments of the present disclosure, the first station 911 is a station being played, and the station indicator 917 is placed at an area corresponding to the first station 911. The second station 913 is a station placed at a location adjacent to the first station 911, and the third station 915 is a station that is placed to face the first station 911 on a location displayed at the station select dial 910. In certain embodiments, since probability of playing on pieces of audio data included in the second station 913 is higher in order than that on pieces of audio data included in the third station 915, a great weight is assigned to the audio data included in the second station 913 compared to pieces of audio data included in the third station 915.

According to various embodiments of the present disclosure, the electronic device stores identifiers (e.g., an order number and the like) of pieces of audio data included in the first station 911 at a third weight area of a management list and stores identifiers of pieces of audio data included in the second station 913 at a second weight area of the management list. According to various embodiments of the present disclosure, the electronic device stores an identifier of audio data, which corresponds to a first track or a lastly played track of the second station 913, and an identifier, which corresponds to a first track or a lastly played track of the third station 915 at a third weight area of the management list.

Referring to FIG. 9B, a station select dial 930 includes a first station 951 and a second station 971 that are arranged at a station area. According to various embodiments of the present disclosure, the first station 951 is a station being played and includes a first play list 953 including first audio data 955. The second station 971 is a station that is placed at a location adjacent to the first station 951 and includes a second play list 973 including second audio data 975.

According to various embodiments of the present disclosure, pieces of audio data included in the first play list 953 are played in order unless a user changes a station. In certain embodiments, probability of playing on the audio data included in the first play list 953 is higher than that on the audio data included in the second play list 973. Accordingly, a great weight is assigned to the audio data included in the first play list 953 compared to the audio data included in the second play list 973. Furthermore, a great weight is assigned to first audio data 955 being played and second audio data 975 being a first tack of a station (or a play list) because the first audio data 955 and the second audio data 975 are audio data having relatively high probability of selection. In certain embodiments, identifiers of the first audio data 955 and the second audio data 975 are stored at a third weight area of a management list.

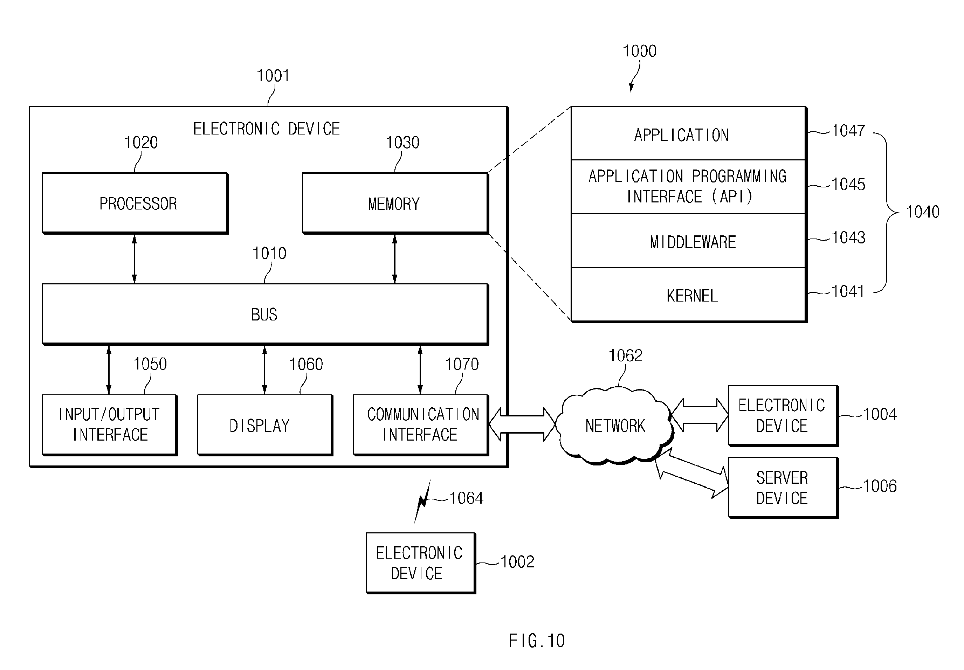

FIG. 10 is a diagram illustrating an electronic device in a network environment according to various embodiments of the present disclosure.

Referring to FIG. 10, there is illustrated an electronic device 1001 in a network environment 1000 according to various embodiments of the present disclosure. The electronic device 1001 includes a bus 1010, a processor 1020, a memory 1030, an input/output (I/O) interface 1050, a display 1060, and a communication interface 1070. According to various embodiments of the present disclosure, the electronic device 1001 may not include at least one of the above-described components or may further include other component(s).

The bus 1010 interconnects the above-described components 1010 to 1070 and is a circuit for conveying communications (e.g., a control message and/or data) among the above-described components.

The processor 1020 includes one or more of a central processing unit (CPU), an application processor (AP), or a communication processor (CP). The processor 1020 performs, for example, data processing or an operation associated with control or communication of at least one other component(s) of the electronic device 1001.

The memory 1030 includes a volatile or nonvolatile memory. The memory 1030 stores instructions or data associated with at least one other component(s) of the electronic device 1001. According to various embodiments of the present disclosure, the memory 1030 stores software or a program 1040. The memory 1030 includes, for example, a kernel 1041, a middleware 1043, an application programming interface (API) 1045, or an application (or an application program) 1047. At least a portion of the kernel 1041, the middleware 1043, or the API 1045 is called an "operating system" (OS).

The kernel 1041 controls or manages system resources (e.g., the bus 1010, the processor 1020, the memory 1030, and the like) that are used to execute operations or functions of other programs (e.g., the middleware 1043, the API 1045, and the application program 1047). Furthermore, the kernel 1041 provides an interface that allows the middleware 1043, the API 1045, or the application program 1047 to access discrete components of the electronic device 1001 to control or manage system resources.

The middleware 1043 performs a mediation role such that the API 1045 or the application program 1047 communicates with the kernel 1041 to exchange data.

Furthermore, the middleware 1043 processes task requests received from the application program 1047 according to a priority. For example, the middleware 1043 assigns the priority, which makes it possible to use a system resource (e.g., the bus 1010, the processor 1020, the memory 1030, or the like) of the electronic device 1001, to at least one of the application program 1047. For example, the middleware 1043 processes the one or more task requests according to the priority assigned to the at least one, which makes it possible to perform scheduling or load balancing on the one or more task requests.

The API 1045 is an interface through which the application program 1047 controls a function provided by the kernel 1041 or the middleware 1043, and includes, for example, at least one interface or function (e.g., an instruction) for a file control, a window control, image processing, a character control, or the like.

The I/O interface 1050 transmits an instruction or data, input from a user or another external device, to other component(s) of the electronic device 1001. Furthermore, the I/O interface 1050 outputs an instruction or data, received from other component(s) of the electronic device 1001, to a user or another external device.

The display 1060 includes, for example, a liquid crystal display (LCD), a light-emitting diode (LED) display, an organic LED (OLED) display, or a microelectromechanical systems (MEMS) display, or an electronic paper display. The display 1060 displays, for example, various contents (e.g., a text, an image, a video, an icon, a symbol, and the like) to a user. The display 1060 includes a touch screen and receives, for example, a touch, gesture, proximity, or hovering input using an electronic pen or a portion of a user's body.

The communication interface 1070 establishes communication between the electronic device 1001 and an external electronic device (e.g., a first external electronic device 1002, a second external electronic device 1004, or a server 1006). For example, the communication interface 1070 is connected to a network 1062 through wireless communication or wired communication to communicate with the external device (e.g., a second external electronic device 1004 or a server 1006).

According to various embodiments of the present disclosure, the server 1006 is a server that supports a streaming radio. The electronic device 1001 is connected to a network 1062 through wired or wireless communication based on the communication interface 1070 to collect audio data, which a service provider or contents provider provides, from the server 1006 supporting the streaming radio. According to various embodiments of the present disclosure, with regard to collection of audio data, the server 1006 assigns weights to pieces of audio data based on information such as preference of a user and the like, thereby reducing a buffering time. The server 1006 provides the electronic device 1001 with a portion of associated audio data based on the assigned weights of the audio data, thereby reducing a buffering time needed to collect audio data. In this connection, the information such as preference of a user and the like is checked based on a playing count of specific audio data for a user, which is collected by the server 1006 supporting the streaming radio, a last playing time of the specific audio data or the like.

The wireless communication includes at least one of, for example, LTE, LTE-A, CDMA, WCDMA, UMTs, WiBro, GSM, or the like, as cellular communication protocol. Furthermore, the wireless communication includes, for example, a local area network 1064. The local area network 1064 includes, for example, at least one of Wi-Fi, BLUETOOTH, near field communication (NFC), global positioning system (GPS), or the like. The wired communication includes at least one of, for example, a universal serial bus (USB), a high definition multimedia interface (HDMI), a recommended standard-1032 (RS-1032), or a plain old telephone service (POTS). The network 1062 includes at least one of telecommunications networks, for example, a computer network (e.g., LAN or WAN), an internet, or a telephone network.

Each of the first and second external electronic devices 1002 and 1004 is a device of which the type is different from or the same as that of the electronic device 1001. According to various embodiments of the present disclosure, the server 1006 includes a group of one or more servers. According to various embodiments of the present disclosure, all or a part of operations that the electronic device 1001 performs may be executed by another or plural electronic devices (e.g., the electronic devices 1002 and 1004 and the server 1006). According to various embodiments of the present disclosure, in the case where the electronic device 1001 executes any function or service automatically or in response to a request, the electronic device 1001 may not perform the function or the service internally, but, alternatively or additionally, it requests at least a portion of a function associated with the electronic device 1001 at other device (e.g., the electronic device 1002 or 1004 or the server 1006). The other electronic device (e.g., the electronic device 1002 or 1004 or the server 1006) executes the requested function or additional function and transmits the execution result to the electronic device 1001. The electronic device 1001 provides the requested function or service using the received result or additionally processes the received result to provide the requested function or service. To this end, for example, cloud computing, distributed computing, or client-server computing is used.

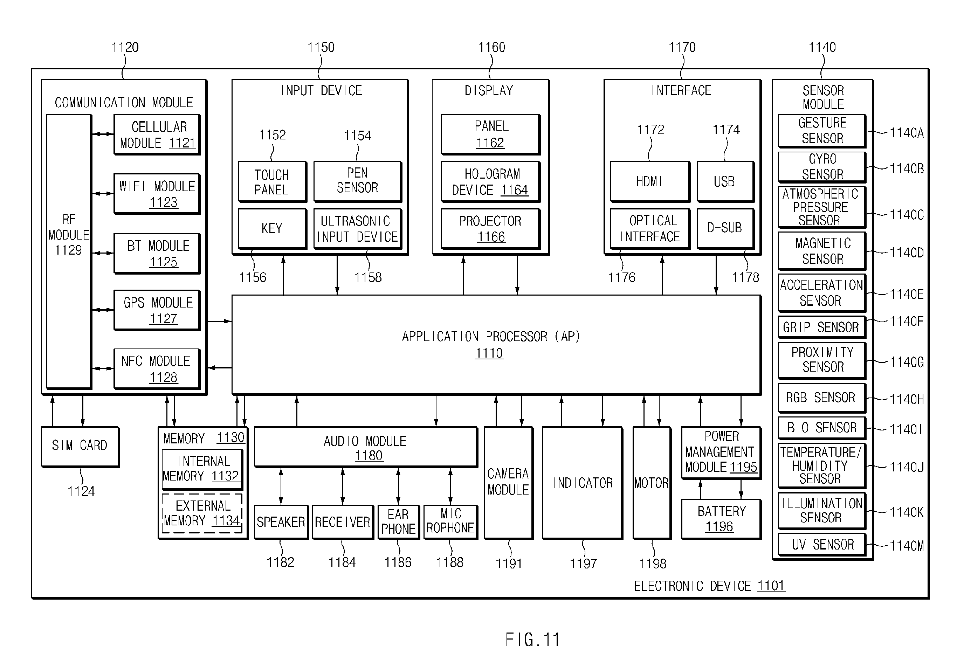

FIG. 11 is a block diagram illustrating an electronic device 1101 according to various embodiments of the present disclosure.

Referring to FIG. 11, an electronic device 1101 includes, for example, all or a part of an electronic device 1001 illustrated in FIG. 10. The electronic device 1101 includes one or more processors (e.g., an application processor (AP)) 1110, a communication module 1120, a subscriber identification module 1124, a memory 1130, a sensor module 1140, an input device 1150, a display 1160, an interface 1170, an audio module 1180, a camera module 1191, a power management module 1195, a battery 1196, an indicator 1197, and a motor 1198.

The processor 1110 drives an operating system (OS) or an application to control a plurality of hardware or software components connected to the processor 1110 and processes and computes a variety of data. The processor 1110 is implemented with a System on Chip (SoC), for example. According to various embodiments of the present disclosure, the processor 1110 further includes a graphic processing unit (GPU) or an image signal processor. The processor 1110 includes at least a part (e.g., a cellular module 1121) of components illustrated in FIG. 11. The processor 1110 loads and processes an instruction or data, which is received from at least one of other components (e.g., a nonvolatile memory), and stores a variety of data at a nonvolatile memory.

The communication module 1120 is configured the same as or similar to a communication interface 1070 of FIG. 10. The communication module 1120 includes a cellular module 1121, a wireless-fidelity (Wi-Fi) module 1123, a BLUETOOTH (BT) module 1125, a global positioning system (GPS) module 1127, a near field communication (NFC) module 1128, and a radio frequency (RF) module 1129.

The cellular module 1121 provides voice communication, video communication, a character service, an Internet service or the like through a communication network. According to various embodiments of the present disclosure, the cellular module 1121 performs discrimination and authentication of an electronic device 1101 within a communication network using a subscriber identification module 1124 (e.g., a SIM card), for example. According to various embodiments of the present disclosure, the cellular module 1121 performs at least a portion of functions that the processor 1110 provides. According to various embodiments of the present disclosure, the cellular module 1121 includes a communication processor (CP).

Each of the Wi-Fi module 1123, the BT module 1125, the GPS module 1127, and the NFC module 1128 includes a processor for processing data exchanged through a corresponding module, for example. According to various embodiments of the present disclosure, at least a portion (e.g., two or more components) of the cellular module 1121, the Wi-Fi module 1123, the BT module 1125, the GPS module 1127, and the NFC module 1128 is included within one Integrated Circuit (IC) or an IC package.

The RF module 1129 transmits and receives a communication signal (e.g., an RF signal). The RF module 1129 includes a transceiver, a power amplifier module (PAM), a frequency filter, a low noise amplifier (LNA), an antenna, or the like. According to various embodiments of the present disclosure, at least one of the cellular module 1121, the Wi-Fi module 1123, the BT module 1125, the GPS module 1127, or the NFC module 1128 transmits and receives an RF signal through a separate RF module.

The subscriber identification module 1124 includes, for example, a subscriber identification module and includes unique identify information (e.g., integrated circuit card identifier (ICCID)) or subscriber information (e.g., integrated mobile subscriber identity (IMSI)).

The memory 1130 (e.g., a memory 1030) includes an internal memory 1132 or an external memory 1134. For example, the internal memory 1132 includes at least one of a volatile memory (e.g., a dynamic random access memory (DRAM), a static RAM (SRAM), or a synchronous DRAM (SDRAM)), a nonvolatile memory (e.g., a one-time programmable read only memory (OTPROM), a programmable ROM (PROM), an erasable and programmable ROM (EPROM), an electrically erasable and programmable ROM (EEPROM), a mask ROM, a flash ROM, a NAND flash memory, or a NOR flash memory), a hard drive, or a solid state drive (SSD).

The external memory 1134 includes a flash drive, for example, compact flash (CF), secure digital (SD), micro secure digital (Micro-SD), mini secure digital (Mini-SD), extreme digital (xD), multimedia card (MMC), a memory stick, or the like. The external memory 1134 is functionally or physically connected to the electronic device 1101 through various interfaces.

The sensor module 1140 measures, for example, a physical quantity or detects an operation state of the electronic device 1101. The sensor module 1140 converts the measured or detected information to an electric signal. The sensor module 1140 includes at least one of a gesture sensor 1140A, a gyro sensor 1140B, a barometric pressure sensor 1140C, a magnetic sensor 1140D, an acceleration sensor 1140E, a grip sensor 1140F, a proximity sensor 1140G, a color sensor 1140H (e.g., red, green, blue (RGB) sensor), a biometric sensor 1140I, a temperature/humidity sensor 1140J, an illuminance sensor 1140K, or an UV sensor 1140M. Although not illustrated, additionally or generally, the sensor module 1140 further includes, for example, an E-nose sensor, an electromyography sensor (EMG) sensor, an electroencephalogram (EEG) sensor, an electrocardiogram (ECG) sensor, a photoplethysmographic (PPG) sensor, an infrared (IR) sensor, an iris sensor, and/or a fingerprint sensor. The sensor module 1140 further includes a control circuit for controlling at least one or more sensors included therein. According to various embodiments of the present disclosure, the electronic device 1101 further includes a processor that is a part of the processor 1110 or independent of the processor 1110 and is configured to control the sensor module 1140. The processor controls the sensor module 1140 while the processor 1110 remains at a sleep state.

The input device 1150 includes, for example, a touch panel 1152, a (digital) pen sensor 1154, a key 1156, or an ultrasonic input device 1158. The touch panel 1152 uses at least one of capacitive, resistive, infrared and ultrasonic detecting methods. Also, the touch panel 1152 further includes a control circuit. The touch panel 1152 further includes a tactile layer to provide a tactile reaction to a user.

The (digital) pen sensor 1154 is, for example, a part of a touch panel or includes an additional sheet for recognition. The key 1156 includes, for example, a physical button, an optical key, a keypad, and the like. The ultrasonic input device 1158 detects (or senses) an ultrasonic signal, which is generated from an input device, through a microphone (e.g., a microphone 1188) and checks data corresponding to the detected ultrasonic signal.

The display 1160 (e.g., a display 1060) includes a panel 1162, a hologram device 1164, or a projector 1166. The panel 1162 is configured the same as or similar to a display 1060 of FIG. 10. The panel 1162 and the touch panel 1152 are integrated into a single module. The hologram device 1164 displays a stereoscopic image in a space using a light interference phenomenon. The projector 1166 projects light onto a screen to display an image. The screen is arranged in the inside or the outside of the electronic device 1101. According to various embodiments of the present disclosure, the display 1160 further includes a control circuit for controlling the panel 1162, the hologram device 1164, or the projector 1166.

The interface 1170 includes, for example, an HDMI (high-definition multimedia interface) 1172, a USB (universal serial bus) 1174, an optical interface 1176, or a D-sub (D-subminiature) 1178. The interface 1170 is included, for example, in a communication interface 1070 illustrated in FIG. 10. The interface 1170 includes, for example, a mobile high definition link (MHL) interface, a SD card/multi-media card (MMC) interface, or an infrared data association (IrDA) standard interface.

The audio module 1180 converts a sound and an electric signal in dual directions. At least a portion of the audio module 1180 is included, for example, in an input/output interface 1050 illustrated in FIG. 10. The audio module 1180 processes, for example, sound information that is input or output through a speaker 1182, a receiver 1184, an earphone 1186, or a microphone 1188.

The camera module 1191 for shooting a still image or a video includes, for example, at least one image sensor (e.g., a front sensor or a rear sensor), a lens, an image signal processor (ISP), or a flash (e.g., an LED or a xenon lamp).

The power management module 1195 manages, for example, power of the electronic device 1101. According to various embodiments of the present disclosure, a power management integrated circuit (PMIC) a charger IC, or a battery or fuel gauge is included in the power management module 1195. The PMIC includes a wired charging method or a wireless charging method. The wireless charging method includes, for example, a magnetic resonance method, a magnetic induction method or an electromagnetic method and further includes an additional circuit, for example, a coil loop, a resonant circuit, or a rectifier, and the like. The battery gauge measures, for example, a remaining capacity of the battery 1196 and a voltage, current or temperature thereof while the battery is charged. The battery 1196 includes, for example, a rechargeable battery or a solar battery.

The indicator 1197 displays a specific state of the electronic device 1101 or a portion thereof (e.g., a processor 1110), such as a booting state, a message state, a charging state, and the like. The motor 1198 converts an electrical signal into a mechanical vibration and generates the following effects: vibration, haptic, and the like. Although not illustrated, a processing device (e.g., a GPU) for supporting a mobile TV is included in the electronic device 1101. The processing device for supporting a mobile TV processes media data according to the standards of DMB, digital video broadcasting (DVB), MEDIAFLOTM, or the like.

Each of the above-mentioned elements of the electronic device according to various embodiments of the present disclosure may be configured with one or more components, and the names of the elements may be changed according to the type of the electronic device. The electronic device according to various embodiments of the present disclosure includes at least one of the above-mentioned elements, and some elements may be omitted or other additional elements may be added. Furthermore, some of the elements of the electronic device according to various embodiments of the present disclosure are combined with each other to form one entity, so that the functions of the elements are performed in the same manner as before the combination.

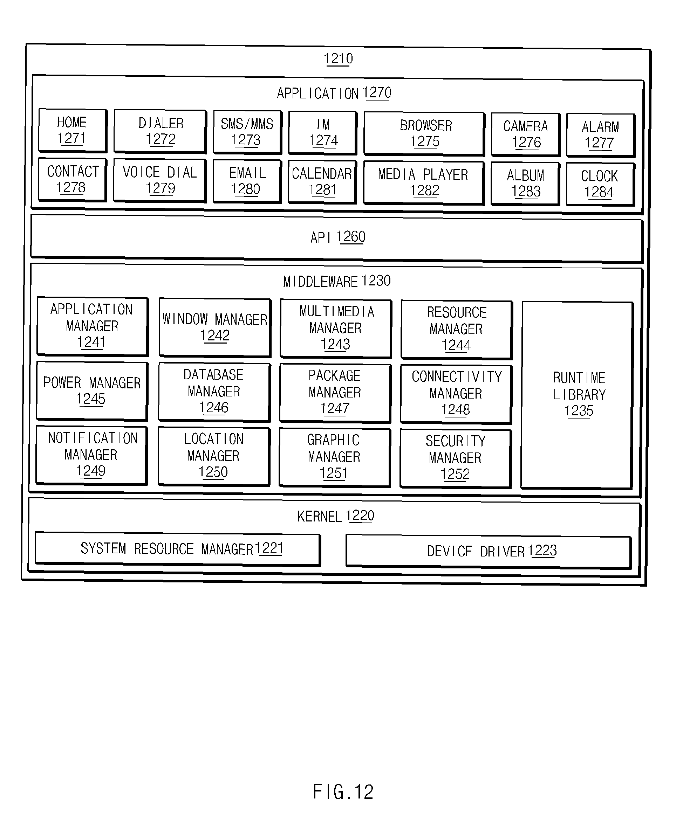

FIG. 12 illustrates a block diagram of a program module 1210 according to various embodiments of the present disclosure.

Referring to FIG. 12, according to various embodiments of the present disclosure, a program module 1210 (e.g., a program 1040) includes an operating system (OS) to control resources associated with an electronic device (e.g., an electronic device 1001), or diverse applications (e.g., an application program 1047) driven on the OS. The OS is, for example, ANDROID, IOS, WINDOWS, SYMBIAN, TIZEN, or BADA.

The program module 1210 includes a kernel 1220, a middleware 1230, an application programming interface (API) 1260, or an application 1270. At least a part of the program module 1210 is preloaded on an electronic device or is downloadable from an external electronic device (e.g., an electronic device 1002 or 1004, a server 1006, and the like).

The kernel 1220 (e.g., a kernel 1041) includes, for example, a system resource manager 1221 or a device driver 1223. The system resource manager 1221 performs control, allocation, or retrieval of system resources. According to various embodiments of the present disclosure, the system resource manager 1221 includes a process managing part, a memory managing part, or a file system managing part. The device driver 1223 includes, for example, a display driver, a camera driver, a BLUETOOTH driver, a common memory driver, an USB driver, a keypad driver, a Wi-Fi driver, an audio driver, or an inter-process communication (IPC) driver.

The middleware 1230 provides, for example, a function that the application 1270 needs in common, or provides diverse functions to the application 1270 through the API 1260 to allow the application 1270 to efficiently use limited system resources of the electronic device. According to various embodiments of the present disclosure, the middleware 1230 (e.g., a middleware 1043) includes at least one of a runtime library 1235, an application manager 1241, a window manager 1242, a multimedia manager 1243, a resource manager 1244, a power manager 1245, a database manager 1246, a package manager 1247, a connectivity manager 1248, a notification manager 1249, a location manager 1250, a graphic manager 1251, or a security manager 1252.

The runtime library 1235 includes, for example, a library module that is used by a compiler to add a new function through a programming language while the application 1270 is being executed. The runtime library 1235 performs input/output management, memory management, or capacities about arithmetic functions.

The application manager 1241 manages, for example, a life cycle of at least one application of the application 1270. The window manager 1242 manages a GUI resource that is used in a screen. The multimedia manager 1243 identifies a format necessary for playing diverse media files and performs encoding or decoding of media files by using a codec suitable for the format. The resource manager 1244 manages resources such as a storage space, memory, or source code of at least one application of the application 1270.

The power manager 1245 operates, for example, with a basic input/output system (BIOS) to manage a battery or power and provides power information for an operation of an electronic device. The database manager 1246 generates, search for, or modify database that is to be used in at least one application of the application 1270. The package manager 1247 installs or updates an application that is distributed in the form of package file.

The connectivity manager 1248 manages, for example, wireless connection such as Wi-Fi or Bluetooth. The notification manager 1249 displays or notifies an event such as arrival message, promise, or proximity notification in a mode that does not disturb a user. The location manager 1250 manages location information of an electronic device. The graphic manager 1251 manages a graphic effect that is provided to a user or manages a user interface relevant thereto. The security manager 1252 provides a general security function necessary for system security or user authentication. According to various embodiments of the present disclosure, in the case where an electronic device (e.g., an electronic device 1001) includes a telephony function, the middleware 1230 further includes a telephony manager for managing a voice or video call function of the electronic device.

The middleware 1230 includes a middleware module that combines diverse functions of the above-described components. The middleware 1230 provides a module specialized to each OS kind to provide differentiated functions. Additionally, the middleware 1230 removes a part of the preexisting components, dynamically or adds a new component thereto.

The API 1260 (e.g., an API 1045) is, for example, a set of programming functions and is provided with a configuration that is variable depending on an OS. For example, in the case where an OS is the ANDROID or the IOS, it is permissible to provide one API set per platform. In the case where an OS is the TIZEN, it is permissible to provide two or more API sets per platform.

The application 1270 (e.g., an application program 1047) includes, for example, one or more applications capable of providing functions for a home 1271, a dialer 1272, an SMS/MMS 1273, an instant message (IM) 1274, a browser 1275, a camera 1276, an alarm 1277, a contact 1278, a voice dial 1279, an e-mail 1280, a calendar 1281, a media player 1282, am album 1283, and a timepiece 1284, or for offering health care (e.g., measuring an exercise quantity or blood sugar) or environment information (e.g., atmospheric pressure, humidity, or temperature).

According to various embodiments of the present disclosure, the application 1270 includes an application (hereinafter referred to as "information exchanging application" for descriptive convenience) to support information exchange between the electronic device (e.g., an electronic device 1001) and an external electronic device (e.g., an electronic device 1002 or 1004). The information exchanging application includes, for example, a notification relay application for transmitting specific information to the external electronic device, or a device management application for managing the external electronic device.

For example, the information exchanging application includes a function of transmitting notification information, which arise from other applications (e.g., applications for SMS/MMS, e-mail, health care, or environmental information), to an external electronic device (e.g., an electronic device 1002 or 1004). Additionally, the information exchanging application receives, for example, notification information from an external electronic device and provides the notification information to a user.

The device management application manages (e.g., installs, deletes, or updates), for example, at least one function (e.g., turn-on/turn-off of an external electronic device itself (or a part of components) or adjustment of brightness (or resolution) of a display) of the external electronic device (e.g., an electronic device 1002 or 1004) that communicates with the electronic device, an application running in the external electronic device, or a service (e.g., a call service or a message service) provided from the external electronic device.

According to various embodiments of the present disclosure, the application 1270 includes an application (e.g., a health care application) that is assigned in accordance with an attribute (e.g., an attribute of a mobile medical device as a kind of electronic device) of the external electronic device (e.g., an electronic device 1002 or 1004). According to various embodiments of the present disclosure, the application 1270 includes an application that is received from an external electronic device (e.g., a server 106 or an electronic device 1002 or 1004). According to various embodiments of the present disclosure, the application 1270 includes a preloaded application or a third party application that is downloadable from a server. The component titles of the program module 1210 according to the embodiment of the present disclosure are modifiable depending on kinds of OSs.

According to various embodiments of the present disclosure, at least a portion of the program module 1210 is implemented by software, firmware, hardware, or a combination of two or more thereof. At least a portion of the program module 1210 is implemented (e.g., executed), for example, by a processor (e.g., a processor 1110). At least a portion of the program module 1210 includes, for example, modules, programs, routines, sets of instructions, or processes, or the like for performing one or more functions.

The term "module" used herein represents, for example, a unit including one or more combinations of hardware, software and firmware. The term "module" is interchangeably used with the terms "unit," "logic," "logical block," "component" and "circuit." The "module" is a minimum unit of an integrated component or is a part thereof. The "module" is a minimum unit for performing one or more functions or a part thereof. The "module" is implemented mechanically or electronically. For example, the "module" includes at least one of an application-specific IC (ASIC) chip, a field-programmable gate array (FPGA), and a programmable-logic device for performing some operations, which are known or will be developed.

At least a portion of an apparatus (e.g., modules or functions thereof) or a method (e.g., operations) according to various embodiments of the present disclosure is, for example, implemented by instructions stored in a computer-readable storage media in the form of a program module. The instruction, when executed by one or more processors (e.g., a processor 1020), causes the one or more processors to perform a function corresponding to the instruction. The computer-readable storage media, for example, is the memory 1030.

A computer-readable recording medium includes a hard disk, a magnetic media, a floppy disk, a magnetic media (e.g., a magnetic tape), an optical media (e.g., a compact disc read only memory (CD-ROM) and a digital versatile disc (DVD), a magneto-optical media (e.g., a floptical disk), and hardware devices (e.g., a read only memory (ROM), a random access memory (RAM), or a flash memory). Also, a program instruction includes not only a mechanical code such as things generated by a compiler but also a high-level language code executable on a computer using an interpreter. The above hardware unit is configured to operate via one or more software modules for performing an operation of the present disclosure, and vice versa.

A module or a program module according to various embodiments of the present disclosure includes at least one of the above elements, or a portion of the above elements may be is omitted, or additional other elements are further included. Operations performed by a module, a program module, or other elements according to various embodiments of the present disclosure are executed sequentially, in parallel, repeatedly, or in a heuristic method. Also, a portion of operations is executed in different sequences, omitted, or other operations are added.

According to various embodiments of the present disclosure, a space for storing audio data is secured by partially deleting audio data based on a weight of the audio data, thereby making it possible to store more audio data.

Although the present disclosure has been described with an exemplary embodiment, various changes and modifications may be suggested to one skilled in the art. It is intended that the present disclosure encompass such changes and modifications as fall within the scope of the appended claims.

## Claims

1. An electronic device comprising:
a memory configured to store audio data; and
a processor configured to assign a weight of each of audio data stored at the memory and delete a portion of selected audio data based on the weight of each of the audio data.

2. The electronic device of claim 1, wherein the processor is further configured to assign a weight of each of the audio data based on at least one of a preference on the audio data, which is checked according to history information of the audio data or probability of playing on the audio data.

3. The electronic device of claim 2, wherein the history information of the audio data includes at least one of a storing time, a last playing time, a playing count, or an accumulated playing time of the audio data.

4. The electronic device of claim 2 or 3, wherein the probability of playing on the audio data is checked based on at least one of how the audio data is adjacent to audio data being played in time or order, whether the audio data exists in the same play list as the audio data being played or a playing order in a specific play list.

5. The electronic device of any of claims 1-4, wherein the processor is further configured to delete a portion of the selected audio data as much as a specific size or a size determined according to the weight of each of the audio data.

6. The electronic device of any of claims 1-5, wherein the processor is further configured to check whether the specific audio data is stored at the memory in response to a play request on the specific audio data.

7. The electronic device of claim 6, wherein the processor is further configured to collect the specific audio data from a specific server, which is connected based on a communication module included in the electronic device if the specific audio data is not stored at the memory, and
wherein the processor is further configured to store the collected audio data at the memory if a size of the collected audio data is greater than or equal to a specific size.

8. The electronic device of claim 6, wherein if the specific audio data is deleted by a size or more and the specific audio data deleted is stored at the memory, the processor is further configured to collect the deleted data of the specific audio data from a specific server, which is connected based on a communication module included in the electronic device at a point in time when the specific audio data is played during a time or by a size, and
wherein the processor is further configured to store the deleted data collected at the memory to be continuous with a deleted portion of the specific audio data or to be associated with.

9. The electronic device of claim 8, wherein the processor is further configured to again assign a weight of the specific audio data to include a weight greater than other audio data stored at the memory.

10. The electronic device of claim 1, wherein the processor is further configured to compare a size of collected audio data and a size of a free space of the memory in response to a play request on specific audio data, and
wherein if the size of the collected audio data is greater than that of the free space of the memory, the processor is further configured to delete a portion of specific audio data stored at the memory.

11. A method of storing audio data in an electronic device, comprising:
assigning a weight of each audio data stored in a memory; and
deleting a portion of selected audio data based on the weight of each of the audio data.

12. The method of claim 11, wherein assigning the weight comprises assigning a weight of each of the audio data based on at least one of preference on the audio data, which is checked according to history information of the audio data or probability of playing on the audio data.

13. The method of claim 12, wherein assigning the weight further comprises at least one of:
including at least one of a storing time, a last playing time, a playing count, or an accumulated playing time of the audio data in the history information of the audio data; and
checking probability of playing on the audio data based on at least one of how the audio data is adjacent to audio data being played in time or order, whether the audio data exists in the same play list as the audio data being played or a playing order in a specific play list.

14. The method of claim 11, 12 or 13, further comprising:
checking whether the specific audio data is stored at the memory in response to a play request on the specific audio data;
collecting the specific audio data from a specific server, which is connected based on a communication module included in the electronic device if the specific audio data is not stored at the memory and storing the collected audio data at the memory if a size of the collected audio data is greater than or equal to a specific size;
if the specific audio data is deleted by a size or more and the specific audio data deleted is stored at the memory, collecting the deleted data of the specific audio data from a specific server, which is connected based on the communication module at a point in time when the specific audio data is played during a time or by a size and storing the deleted data collected at the memory to be continuous with a deleted portion of the specific audio data or to be associated with; and
again assigning a weight of the specific audio data to include a weight greater than other audio data stored at the memory.

15. The method of any of claims 11-14, further comprising:
comparing a size of collected audio data and a size of a free space of the memory in response to a play request on specific audio data; and
if the size of the collected audio data is greater than that of the free space of the memory, deleting a portion of specific audio data stored at the memory.
